# EUROPEAN PATENT APPLICATION

(11) **EP 1 434 216 A2**
(43) Date of publication of application: **30.06.2004**
(21) Application number: 03029230.4
(22) Date of filing: 18.12.2003
(51) Int. Cl.: G11B 19/12

(54) **Method and device for discriminating type of multi-layer optical disc**

(30) Priority: 18.12.2002 KR 2002081061
(71) Applicant: Hitachi-LG Data Storage Korea Inc., Seoul 150-010 (KR)
(72) Inventor: Seo, Jee Won, Kyunggi-do, 459-110 (KR)
(74) Representative: VOSSIUS & PARTNER

(57) **Abstract**

A method is provided for discriminating the type of a multi-layer optical disc. This method can accurately discriminate the type of a multi-layer optical disc loaded in an optical disc player such as a DVD player, based on the detection time interval between successive focus OK signals. The multi-layer optical disc may have diverse types such as a DVD-dual layer type and a hybrid super audio CD type. In accordance with this method, it is possible to achieve normal servo and signal processing operations according to the type of the multi-layer optical disc (Fig. 1).

## Description

The present invention relates to a method for discriminating the type of a multi-layer optical disc, and more particularly to a method and device for discriminating the type of a multi-layer optical disc such as a DVD dual layer or a hybrid super audio CD.

High-density optical discs capable of recording a large quantity of high-quality video and audio data, such as DVDs, have been developed and made commercially available. A DVD-dual layer having two recording layers has also been developed. This DVD-dual layer is expected to be made commercially available in the near future.

Meanwhile, optical disc players such as DVD players have a function of discriminating whether an optical disc loaded therein is a DVD-single layer type provided with a single recording layer, as in a general DVD, or a DVD-dual layer type provided with two recording layers.

Based on the result of the discrimination, such an optical disc player performs servo and signal processing operations corresponding to the type of the optical disc, that is, the DVD-single layer type or DVD-dual layer type, in order to normally reproduce data recorded on the first recording layer (Layer 0) and/or the second recording layer (Layer 1).

Recently, new multi-layer optical discs of diverse types, for example, hybrid super audio CDs having two recording layers, have been developed. However, the above mentioned optical disc players such as DVD players cannot automatically and efficiently discriminate the type of such a multi-layer optical disc. For this reason, it has been strongly and urgently required to provide a solution to such a problem.

It is an object of the present invention is to provide a multi-layer optical disc type discriminating method and device which are capable of efficiently discriminating the type of a multi-layer optical disc such as a DVD dual layer or a hybrid super audio CD which may have diverse types.

In accordance with an aspect of the present invention, there is provided a method for discriminating the type of a multi-layer optical disc, the method comprising the steps of: (a) monitoring a focus error signal detected while varying a distance between a focus lens and a loaded multi-layer optical disc; and (b) discriminating a type of the multi-layer optical disc based on detection time intervals between a plurality of focus OK signals detected during the monitoring of the focus error signal.

In accordance with another aspect of the present invention, there is provided a method for discriminating the type of a multi-layer recording medium, the method comprising: monitoring a focus error signal detected as a focus lens moves incrementally closer to a loaded multi-layer recording medium; and discriminating a type of the loaded multi-layer recording medium based on a time interval between first and second points of the focus error signal.

In accordance with another aspect of the present invention, there is provided a device for discriminating the type of a multi-layer optical disc, the device comprising a combination of elements for: monitoring a focus error signal detected while varying a distance between a focus lens and a loaded multi-layer optical disc; and discriminating a type of the multi-layer optical disc based on detection time intervals between a plurality of focus OK signals detected during the monitoring of the focus error signal.

In accordance with another aspect of the present invention, there is provided a device for discriminating the type of a multi-layer recording medium, the device comprising a combination of elements for: monitoring a focus error signal detected as a focus lens moves incrementally closer to a loaded multi-layer recording medium, and discriminating a type of the loaded multi-layer recording medium based on a time interval between first and second points of the focus error signal.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The above objects, and other features and advantages of the present invention will become more apparent after a reading of the following detailed description when taken in conjunction with the drawings, in which:

Fig. 1 illustrates the configuration of an optical disc player to which a multi-layer optical disc type discriminating method according to the present invention is applied;

Fig. 2 is a diagram illustrating types of multi-layer optical discs, to which the present invention is applicable, and focus OK signals detected in association with those disc types; and

Fig. 3 is a flow chart illustrating the multi-layer optical disc type discriminating method according to an embodiment of the present invention.

### DESCRIPTION OF THE PREFERRED EMBODIMENTS

Now, a method for discriminating the type of a multi-layer optical disc in accordance with the preferred embodiments of the present invention will be described with reference to the annexed drawings.

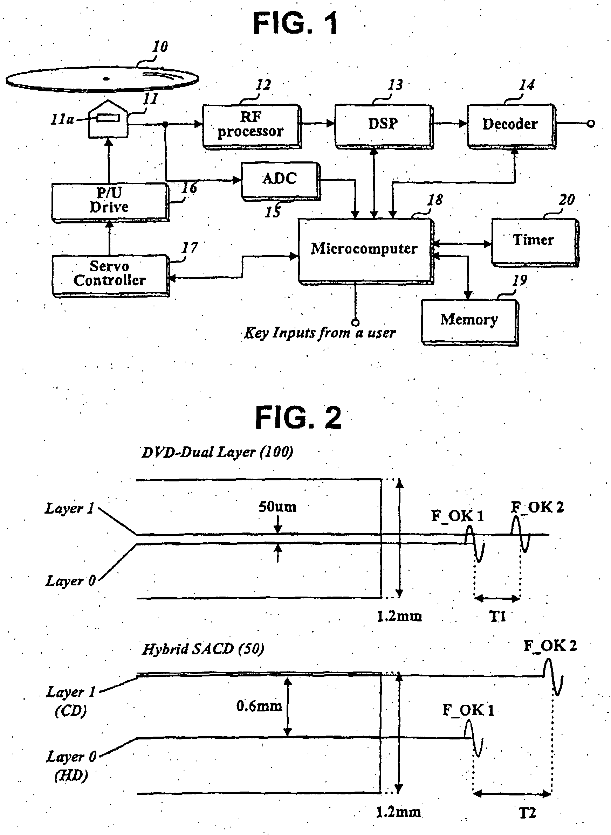

Fig. 1 illustrates the configuration of an optical disc player to which the multi-layer optical disc type discriminating method according to the present invention is applied. As shown in Fig. 1, the optical disc player, which may be, for example, a DVD player, may include an optical pickup 11, a radio frequency (RF) processor (RF) 12, a digital signal processor (DSP) 13, and a decoder 14. The optical disc player may also include an A/D converter (A/D) 15, an optical pickup driver 16, a servo controller 17, a microcomputer 18, a memory 19, and a timer 20. All the components of the optical disc player are operatively coupled.

A focusing lens (FL) 11a is included in the optical pickup 11. The focusing lens 11a is vertically shifted in accordance with a drive voltage applied by the optical pickup driver 16, so as to perform a focusing operation on a recording layer of an optical disc 10 loaded in the optical disc player.

The RF processor 12 receives an RF electrical signal outputted from a photo detector (PD) included in the optical pickup 11 in accordance with an opto-electric conversion carried out by the photo detector. The RF processor 12 processes the received RF electrical signal, thereby generating a binary signal. The digital signal processor 13 and decoder 14 carry out a series of operations for recovering the binary signal into original video and audio signals.

When the optical disc 10 is loaded into the optical disc player, the microcomputer 18 controls the servo controller 17 to downwardly shift the focus lens 11a included in the optical pickup 11a to a predetermined initial position, and then gradually upwardly shift the focus lens 11a. The upwardly shifting of the focus lens 11a would involve moving the focus lens 11a vertically closer to the disc 10. During the gradual upward shift of the focus lens 11a, the microcomputer 18 monitors a focus error signal outputted from the optical pickup 11 to detect focus OK signals, thereby discriminating the type of the optical disc 10.

The optical disc 10 may be, for example, a DVD-dual layer or a hybrid super audio CD (SACD). As shown in Fig. 2, the DVD-dual layer, which is denoted by the reference numeral 100, has a thickness of 1.2mm, while being formed with two recording layers. The first recording layer 'Layer 0' and the second recording layer 'Layer 1' of the disc 100 are arranged at opposite sides of a central plane crossing the thickness of the disc 100 such that they are spaced apart from each other by a distance of about 50µm.

On the other hand, the hybrid SACD, which is denoted by the reference numeral 50, has a thickness of 1.2mm, while being formed with two recording layers. The first recording layer 'Layer 0' of the hybrid SACD 50 is arranged at a central plane crossing the thickness of the disc 50, and the second recording layer 'Layer 1' of the hybrid SACD 50 is spaced apart from the first recording layer by a distance of about 0.6mm.

The microcomputer 18 discriminates the loaded optical disc as the DVD-dual layer 100 when the detection time interval between first and second focus OK signals F_OK 1 and F_OK 2 sequentially detected by the microcomputer 18 during the upward shift of the focus lens 11a is short (T1). On the other hand, the microcomputer 18 discriminates the optical disc as the hybrid SACD 50 when the detection time interval between the first and second focus OK signals F_OK 1 and F_OK 2 is long (T2) This will be described in detail hereinafter.

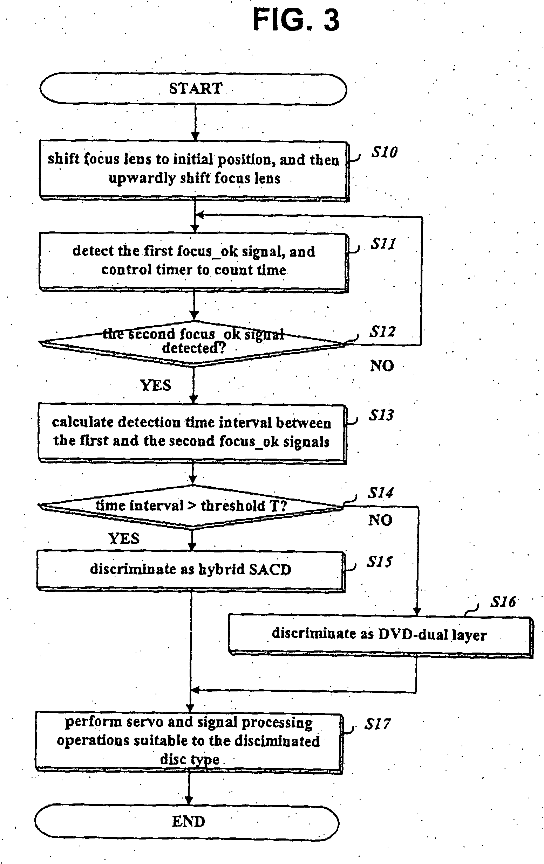

Fig. 3 is a flow chart illustrating the multi-layer optical disc type discriminating method according to the present invention. This method is implementable using the device of Fig 1 or other suitable devices. When an optional optical disc is loaded into the optical disc player as shown in Fig. 1, which may be a DVD player, the microcomputer 18 controls the servo controller 17 to downwardly shift the focus lens 11a of the optical pickup 11 to a predetermined initial position, and then gradually upwardly shift the focus lens 11a (S10).

During the gradual upward shift of the focus lens 11a, the microcomputer 18 continuously monitors a focus error signal, which is outputted from the optical pickup 11, and sampled and digitally converted by the A/D converter 15. When the microcomputer 18 detects a zero crossing point of the focus error signal (which is the first focus OK signal F_OK 1 associated with the first recording layer 'Layer 0'), it controls the timer 20 to start a time counting operation (S11).

When the microcomputer 18 subsequently detects another zero crossing point of the focus error signal (which is the second focus OK signal F_OK 2 associated with the second recording layer 'Layer 1') during its focus error signal monitoring operation (S12), it controls the timer 20 to stop its time counting operation, and identifies the time counted by the timer 20 as a detection time interval T between the first and second focus OK signals (S12).

The microcomputer 18 then compares the identified detection time interval T with a predetermined reference time interval Tr which can be prestored in the memory 19 or other location. The reference time interval Tr may be set to the time interval between the points of time when the first and second focus OK signals are detected, respectively, in association with the DVD-dual layer. When it is determined based on the result of the comparison that the detection time interval T exceeds the reference time interval Tr (S13), the microcomputer 18 discriminates the loaded optical disc to be the hybrid SACD (S15).

On the other hand, it is determined that the detection time interval T does not exceed the reference time interval Tr, the microcomputer 18 discriminates the loaded optical disc to be the DVD-dual layer (S16).

Thereafter, the microcomputer 18 controls the servo controller 17, digital signal processor 13, and decoder 14 in accordance with the type of the optical disc discriminated in the above described manner, so as to achieve normal servo and signal processing operations in the optical disc player (S17).

For reference, when only the first focus OK signal F_OK 1 is detected in the above described procedure, the microcomputer 18 discriminates the loaded optical disc as an optical disc having a single recording layer (the first recording layer) such as a DVD-single layer.

Although the preferred embodiments of the invention have been disclosed for illustrative purposes, those skilled in the art will appreciate that various modifications, additions and substitutions are possible, without departing from the scope and spirit of the invention as disclosed in the accompanying claims. For example, the application of the present invention may be extended to multi-layer optical discs of types other than DVD-dual layer and hybrid super audio CD types.

As apparent from the above description, the present invention provides a multi-layer optical disc type discriminating method which can accurately discriminate the type of a multi-layer optical disc loaded in an optical disc player such as a DVD player, based on the detection time interval between successive focus OK signals. The multi-layer optical disc may have diverse types such as a DVD-dual layer type and a hybrid super audio CD type. The present invention is very useful because it achieves normal servo and signal processing operations according to the discriminated type of the multi-layer optical disc.

## Claims

1. A method for discriminating the type of a multi-layer recording medium, the method comprising:
monitoring a focus error signal detected as a focus lens moves incrementally closer to a loaded multi-layer recording medium; and
discriminating a type of the loaded multi-layer recording medium based on a time interval between first and second points of the focus error signal.

2. The method according to claim 1, wherein the first and second points of the focus error signal are zero crossing points of the focus error signal.

3. The method according to claim 1 or 2, wherein the first point of the focus error signal is a focus OK signal associated with a first recording layer of the loaded multi-layer recording medium, and the second point of the focus error signal is a focus OK signal associated with a second recording layer of the loaded multi-layer recording medium.

4. The method according to any of claims 1 to 3, wherein the discriminating step includes:
discriminating whether the multi-layer recording medium is a DVD-dual layer or a hybrid super audio CD.

5. The method according to any of claims 1 to 4, wherein the discriminating step includes: comparing the time interval with a predetermined reference value.
